# EUROPÄISCHE PATENTANMELDUNG

(11) **EP 2 130 514 A1**
(43) Veröffentlichungstag der Anmeldung: **09.12.2009**
(21) Anmeldenummer: 09007460.0
(22) Anmeldetag: 05.06.2009
(51) Int. Cl.: A61C 8/00

(54) **Zahnimplantataufbau mit optisch abtastbaren Elementen, welche dessen Lage definieren**

(30) Priorität: 06.06.2008 DE 102008028214
(71) Anmelder: Wieland Dental Implants GmbH, 75446 Wiernsheim (DE)
(72) Erfinder: Scherberger, Rolf, 75417 Mühlacker (DE)
(74) Vertreter: Lindner, Michael

(57) **Zusammenfassung**

Die vorliegende Erfindung betrifft einen Scanaufbau-System mit einem Zahnimplantataufbau (20), der zum dauerhaften Verbleib in einem Zahnimplantat (12) ausgelegt ist und einen ersten und einen zweiten Längsabschnitt (22, 24) aufweist und der erste Längsabschnitt (22) eine Längsachse (L) besitzt und bezüglich seiner Geometrie an das Zahnimplantat (12) angepasst ist, und der zweite Längsabschnitt (24) zur Aufnahme eines Aufbaus (16) ausgebildet ist, wobei der zweite Längsabschnitt (24) ein erstes (38) ein zweites (40) und ein drittes (42) geometrisches Element aufweist, die derart angeordnet sind, dass sie von außen über eine optische Abtastvorrichtung erfasst werden können, wobei das erste geometrische Element (38) ausgelegt ist, durch dessen optische Abtastung die Ausrichtung der Längsachse (L) des ersten Längsabschnitts (22) zu bestimmen, das zweite geometrische Element (40) ausgelegt ist, durch dessen optische Abtastung das cervicale Ende (15) des Zahnimplantats (12) zu bestimmen, und das dritte geometrische Element (42) ausgelegt ist, durch dessen optische Abtastung die Lage einer Rotationssicherung (14, 28) im ersten Längsabschnitt (22) zu bestimmen, und der zweite Längsabschnitt (24) eine bezüglich der optischen Abtastung reflexionsarme Oberfläche zumindest in den optisch abzutastenden Bereichen (38, 40, 42) besitzt. Das Scanaufbau-System weist ferner ein Verlängerungselement (50) auf, dessen eines Ende (54) ausgebildet ist, um mit dem zweiten Längsabschnitt (24) des Zahnimplantataufbaus (20) lösbar verbindbar zu sein, wobei auch das Verlängerungselement wenigstens eines der drei geometrischen Elemente (38, 40, 42) aufweist.

## Beschreibung

Die vorliegende Erfindung betrifft ein Scanaufbau-System, das bei einer Computer-unterstützten Anfertigung von keramischen Zahnaufbauten und Kronen zum Einsatz kommt.

Die Firma Wieland Dental und Technik, Pforzheim, bietet beispielsweise unter dem Namen Zeno® Tec ein System an, mit dessen Hilfe ein keramischer Zahnersatz Computer-unterstützt hergestellt werden kann. Das Zeno®-System umfasst neben einer Fräsmaschine zur Herstellung eines keramischen Gerüsts und einer Verblendkeramik auch einen sog. Scanner, der eine optische Abtastung eines Arbeitsmodells ermöglicht. Im Zusammenhang mit dem optischen Abtasten bzw. Scannen des Arbeitsmodells kommen dann Scanaufbauten zum Einsatz, mit deren Hilfe eine genaue geometrische Vermessung der Lage eines Zahnimplantats möglich ist.

Ein Verfahren zur Herstellung eines Zahnersatzes, bei dem eine optische Vermessung und eine Computer-unterstützte Fertigung eingesetzt werden, ist beispielsweise aus der Druckschrift EP 1 062 916 B1 bekannt. Darin wird beschrieben, dass auf einem von einem Zahntechniker angefertigten Arbeitsmodell eine sog. Manipulierimplantatanordnung angebracht wird, die bezüglich ihrer Lage den Zahnimplantaten im Mund des Patienten entspricht. Die Manipulierimplantatanordnung kann aus einem oder mehreren Manipulierimplantaten bestehen, entsprechend der Anzahl der tatsächlichen Zahnimplantate. Die Manipulierimplantate ragen nicht oder kaum aus dem Arbeitsmodell, ebenso wie die Zahnimplantate nicht oder kaum aus dem entsprechenden Kieferbereich des Patienten ragen. Als Nächstes wird daher auf jedem Manipulierimplantat provisorisch ein Hilfselement angebracht. Diese Hilfselemente ragen aus dem Arbeitsmodell und bilden Hilfselemente bzw. Vermessungsteile, da sie die Einsatztiefe, die Längsachsenrichtung und die Winkelstellung der Manipulierimplantate im Arbeitsmodell und damit auch die Implantat-Tiefe, die Implantat-Achsrichtung und die Implantat-Winkellage im Mund des Patienten wiedergeben. Mit Hilfe dieser Hilfselemente oder Vermessungsteile lassen sich anschließend Daten der Geometrie des Arbeitsmodells erfassen, und daraus kann auf die genaue Lage der Implantate im Kieferbereich des Patienten geschlossen werden. Aus den einmal erfassten Daten lassen sich weitere Daten ermitteln, die für die vollautomatisierte Herstellung sowie für die Ermittlung der Einschubrichtung der weiteren Bestandteile des individuellen Zahnersatzes benötigt werden. Insbesondere ist es möglich, die Bestandteile von mehrere Implantate erfassendem Zahnersatz so herzustellen, dass die Eingliederung in einer einzigen Einschubrichtung erfolgen kann.

Das heißt mit anderen Worten, dass das Scanaufbau-System, das insbesondere die erwähnten Hilfselemente umfasst, aus Teilen besteht, die nur für diesen Zweck der optischen Erfassung bereitgestellt werden. Im Kiefer des Patienten werden statt den Hilfselementen später sog. Zahnimplantataufbauten bzw. Abutments eingesetzt.

Einer der damit einhergehenden Nachteile ist darin zu sehen, dass eine große Vielzahl von Bauteilen vom Zahntechniker zu bevorraten ist, insbesondere auch unter der Berücksichtigung, dass die jeweiligen Hilfselemente jeweils an die eingesetzten Zahnimplantate angepasst sein müssen.

Ein weiterer Nachteil ist darin zu sehen, dass die Vermessung mit Elementen erfolgt, die später nicht beim Patienten eingesetzt werden. Geometrie- bzw. Abmessungsabweichungen des Hilfselements und des später im Patienten eingesetzten Abutments können sich folglich addieren und zu unerwünschten Ungenauigkeiten führen.

Vor diesem Hintergrund ist eine der Aufgaben der vorliegenden Erfindung darin zu sehen, die Zahl der zu bevorratenden Bauteile beim Zahntechniker zu verringern. Danach soll die Genauigkeit der optischen Abtastung verbessert werden.

Diese Aufgabe wird von einem Scanaufbau-System gelöst, das einen Zahnimplantataufbau aufweist, der zum dauerhaften Verbleib in einem Zahnimplantat ausgelegt ist und einen ersten und einen zweiten Längsabschnitt aufweist und der erste Längsabschnitt eine Längsachse besitzt und bezüglich seiner Geometrie an das Zahnimplantat angepasst ist, und der zweite Längsabschnitt zur Aufnahme eines Aufbaus ausgebildet ist, wobei der zweite Längsabschnitt ein erstes, ein zweites und ein drittes geometrisches Element aufweist, die derart angeordnet sind, dass sie von außen über eine optische Abtastvorrichtung erfasst werden können, wobei das erste geometrische Element ausgelegt ist, durch dessen optische Abtastung die Ausrichtung der Längsachse des ersten Längsabschnitts zu bestimmen, das zweite geometrische Element ausgelegt ist, durch dessen optische Abtastung das cervicale Ende des Zahnimplantats zu bestimmen und das dritte geometrische Element ausgelegt ist, durch dessen optische Abtastung die Lage einer Rotationssicherung im ersten Längsabschnitt zu bestimmen, und der zweite Längsabschnitt eine bezüglich der optischen Abtastung reflexionsarme Oberfläche zumindest in den optisch abzutastenden Bereichen besitzt, und ein Verlängerungselement aufweist, dessen eines Ende ausgebildet ist, um mit dem zweiten Längsabschnitt des Zahnimplantataufbaus lösbar verbindbar zu sein, wobei auch das Verlängerungselement wenigstens eines der drei geometrischen Elemente aufweist.

Das heißt mit anderen Worten, dass das erfindungsgemäße Scanaufbau-System zum optischen Erfassen der Geometrie/Lage der im Arbeitsmodell eingefügten Zahnimplantate nicht über speziell hierfür vorgesehene Hilfselemente erfolgt, sondern statt dessen mit den später im Patienten verwendeten Zahnimplantataufbauten, die auch als Abutments bezeichnet werden. Auf diese Weise muss der Zahntechniker keine Bauteile für die optische Erfassung bevorraten, da er hierfür die später im Patienten eingesetzten Bauteile verwendet.

Um bei der optischen Erfassung Fehler zu vermeiden, sind die Oberflächen zumindest in den optisch abzutastenden Bereichen, d.h. im Bereich der geometrischen Elemente, reflexionsmindernd ausgestattet. Eine solche reflexionsarme Ausstattung kann bei einem beispielsweise aus Titan gefertigten Zahnimplantataufbau eine dauerhafte oder lösbare reflexionsarme Beschichtung aus einem biokompatiblen Material sein.

Die speziell für die optische Abtastung vorgesehenen geometrischen Elemente im zweiten Längsabschnitt ermöglichen eine sehr präzise optische Erfassung und damit eine Berechnung der exakten Lage des Zahnimplantats im Arbeitsmodell.

Das erfindungsgemäße Scanaufbau-System umfasst zusätzlich ein Verlängerungselement, das immer dann zum Einsatz kommt, wenn der Zahnimplantataufbau für die optische Erfassung zu niedrig ist. Das Verlängerungselement ist an einem Ende komplementär zum zweiten Längsabschnitt des Zahnimplantataufbaus aufgebaut und lässt sich auf diesen aufstecken und verschrauben. Zusätzlich weist das Verlängerungselement zumindest ein geometrisches Element, vorzugsweise jedoch alle drei geometrischen Elemente, auf, so dass die optische Erfassung des Verlängerungselements eine Berechnung der Lage des Zahnimplantats zulässt. Das Verlängerungselement sorgt mit anderen Worten dafür, dass der zweite Längsabschnitt des Zahnimplantataufbaus mit seinen geometrischen Elementen zur besseren optischen Erfassung weiter nach oben verlegt wird.

Ein weiterer Vorteil dieser erfindungsgemäßen Lösung kann darin gesehen werden, dass die Genauigkeit der optischen Erfassung verbessert wird, da mit dem später beim Patienten eingesetzte Zahnimplantataufbau (Abutment) gemessen wird, und nicht mit einem Hilfselement, das ausschließlich für die optische Erfassung zum Einsatz kommt.

Aktuell gibt es auf dem Markt eine Vielzahl von unterschiedlichen Implantat-Systemen, die sich hauptsächlich durch die Ausgestaltung des Zahnimplantats unterscheiden. Dadurch bedingt gibt es eine entsprechend große Anzahl von Zahnimplantataufbauten bzw. Abutments, die jeweils an das Zahnimplantat angepasst sind. Wie bereits erwähnt, ist es bei dem in der oben genannten Druckschrift angegebenen Verfahren erforderlich, Hilfselemente vorzusehen. Durch die Vielzahl unterschiedlicher Implantat-Systeme muss folglich auch eine entsprechend große Anzahl von Hilfselementen vorgesehen werden, was teuer und kompliziert in der Handhabung ist.

Dadurch, dass der erfindungsgemäße Zahnimplantataufbau nur einen Längsabschnitt aufweist, der an das Zahnimplantat angepasst ist, kann der zweite Längsabschnitt im Wesentlichen gleich ausfallen, so dass der Zahntechniker die gleichen Verlängerungselemente verwenden kann, obgleich die Zahnimplantataufbauten für unterschiedliche Zahnimplantat-Systeme vorgesehen sind. Mit anderen Worten hat der erfindungsgemäße Zahnimplantataufbau einen Längsabschnitt, der jeweils an das entsprechende Zahnimplantat-System angepasst ist, und einen weiteren Längsabschnitt, der unabhängig vom Zahnimplantat-System immer gleich ausfällt. Dieser Längsabschnitt wird in erster Linie speziell an die optische Erfassung und deren Anforderungen angepasst, und in zweiter Linie an die auf den Zahnimplantataufbau aufzusetzende Kappe bzw. Gerüst.

Nach einer bevorzugten Weiterbildung ist das erste geometrische Element eine zylindrische Fläche, deren Längsachse mit der Längsachse des ersten Längsabschnitts fluchtet.

Das heißt mit anderen Worten, dass die zylindrische Fläche so ausgebildet ist, dass deren Längsachse mit der Längsachse des ersten Längsabschnitts und damit mit der Längsachse des Zahnimplantats zusammenfällt, so dass eine Berechnung der Lage der Längsachse des Zahnimplantats im Arbeitsmodell möglich ist.

Bei einer bevorzugten Weiterbildung ist das zweite geometrische Element eine Fläche, die parallel zu einer Fläche liegt, die durch das cervicale Ende des Zahnimplantats gebildet wird.

Bei einer bevorzugten Weiterbildung umfasst das dritte geometrische Element zumindest zwei Kanten, die parallel zueinander und parallel zu der Längsachse des ersten Längsabschnitts verlaufen.

Diese Maßnahme ermöglicht eine sehr exakte Erfassung einer Rotationssicherung, die zwischen dem Zahnimplantat und dem Zahnimplantataufbau vorgesehen ist. Die zwei Kanten müssen für eine Erfassung der Rotationssicherung in einem festgelegten örtlichen Verhältnis zu einem im ersten Längsabschnitt des Zahnimplantataufbaus vorgesehenen Rotationssicherungselement stehen.

Bei einer bevorzugten Weiterbildung ist das Zahnimplantataufbau aus Titan hergestellt und vorzugsweise mit einem reflexionsarmen biokompatiblen Material beschichtet.

Bevorzugt ist diese Beschichtung im trockenen Zustand wischfest, was zum Vorteil hat, dass der Zahntechniker ohne weiteres den Zahnimplantataufbau handhaben kann ohne die Gefahr, dass die Beschichtung abgewischt wird oder verschwindet.

Selbstverständlich ist es auch denkbar, dass das reflexionsarme Material dauerhaft verbleibt, was zu einer weiteren Vereinfachung des Gesamtsystems im Hinblick auf die Handhabung verbessert. Ein solches Material kann beispielsweise ein keramisches Material sein.

Bei einer bevorzugten Weiterbildung ist das Verlängerungselement aus einem Kunststoff hergestellt, der eine reflexionsarme Oberfläche besitzt.

Diese Maßnahme hat den Vorteil, dass das Verlängerungselement als sehr kostengünstiges einfach handhabbares Bauelement ausgeführt werden kann.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen. Das heißt beispielsweise, dass die in den Unteransprüchen angegebenen Merkmale alleine ohne die jeweils anderen Merkmale verwendbar sind oder in beliebiger Kombination mit einzelnen Merkmalen der anderen Ansprüche verwendbar sind.

Weitere Vorteile und Ausgestaltungen der Erfindung ergeben sich aus der Beschreibung und der beiliegenden Zeichnung.

Eine Ausführungsform der vorliegenden Erfindung wird nun anhand der nachfolgenden Beschreibung und der Zeichnungen näher erläutert. Dabei zeigen:
- Fig. 1: drei Ansichten eines Scanaufbau-Systems;
- Fig. 2a: eine Seitenansicht des Zahnimplantataufbaus;
- Fig. 2b: eine Schnittdarstellung eines Zahnimplantats, des Zahnimplantataufbaus und einer darauf aufgesetzten Kappe;
- Fig. 2c: eine perspektivische Ansicht des Zahnimplantataufbaus;
- Fig. 3a, b: eine Seitenansicht und eine Schnittdarstellung des Verlängerungselements des Scanaufbau-Systems; und
- Fig. 4: zwei Seitenansichten und eine Schnittdarstellung des Zahnimplantats 12 mit eingesetztem Zahnimplantataufbau und einem darauf aufgesetzten Verlängerungselement.

Wie bereits einleitend ausgeführt, betrifft die vorliegende Erfindung ein Scanaufbau-System, das in Computer-unterstützten Umgebungen zur Fertigung von keramischen Bauteilen eines Zahnersatzes verwendet wird. Da der eigentliche Vorgang bzw. das Verfahren zur Fertigung solcher keramischer Bauteile, wie Aufbauten, Verblendungen, Kronen, etc., nicht Thema dieser Erfindung ist, wird auf den bekannten Stand der Technik verwiesen. Ausführliche Unterlagen zu solchen Verfahren sind beispielsweise bei der Firma Wieland Dental und Technik, Pforzheim, unter dem Namen Zeno® Tec erhältlich.

Im Rahmen der vorliegenden Erfindung soll der Begriff "Zahnersatz" eine Einheit beschreiben, die nicht nur den sichtbaren Teil eines Zahnes oder einer Zahngruppe ergänzt oder ersetzt, sondern auch dessen Zahnwurzel und das somit einen vollständigen Ersatz für einen oder mehrere Zähne eines Patienten bildet. Wie aus dem Stand der Technik bekannt, umfasst ein solcher Zahnersatz mehrere ineinander greifende Bestandteile, nämlich einerseits ein sog. Zahnimplantat, das im Kieferknochen des Patienten inseriert wird, einen sog. Zahnimplantataufbau (auch als Abutment bekannt), der in bzw. auf das Zahnimplantat gesetzt und verschraubt wird. Üblicherweise ist zwischen dem Zahnimplantat und dem Zahnimplantataufbau eine Rotationssicherung vorgesehen.

Auf den Zahnimplantataufbau wird zur Vervollständigung eines Zahnersatzes ein Gerüst, ein Brückengerüst oder eine Kappe aufgesetzt, die üblicherweise aus einem keramischen Material gefertigt sind. Schließlich kommt auf das Gerüst, das Brückengerüst oder die Kappe eine Verblendung zur Ummantelung aufgebracht werden, wobei die Verblendung der einzige Bestandteil des Zahnersatzes ist, der im eingegliederten Zustand des Zahnersatzes am Patienten sichtbar ist.

Im Falle einer Vollkrone kann die Kappe und die Verblendung als ein Bauteil ausgeführt sein.

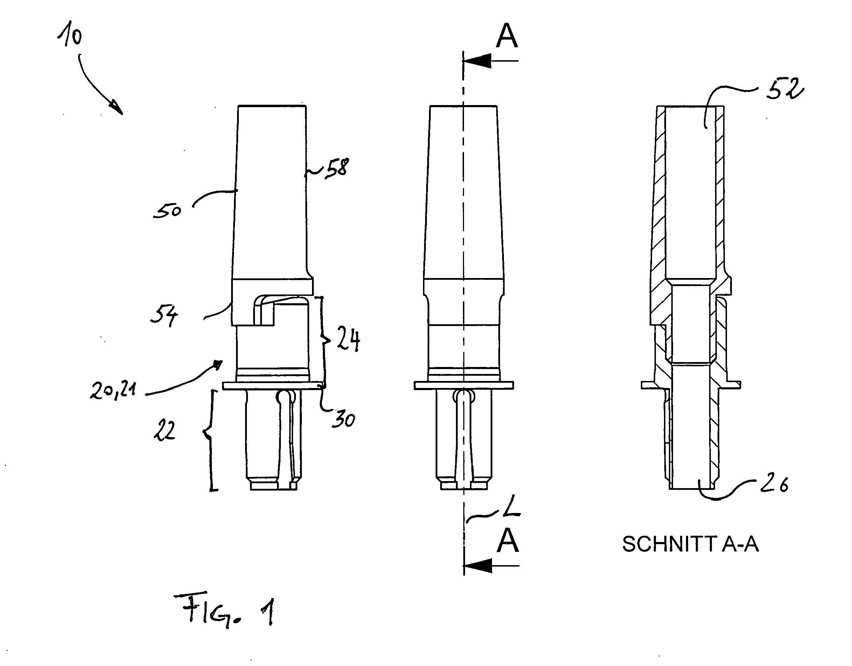

In Fig. 1 ist ein Scanaufbau-System in drei unterschiedlichen Ansichten dargestellt und allgemein mit dem Bezugszeichen 10 gekennzeichnet. Das Scanaufbau-System 10 umfasst zumindest einen Zahnimplantataufbau 20, der allgemein auch als Abutment 21 bezeichnet wird, sowie zumindest ein Verlängerungselement 50.

Der Zahnimplantataufbau 20 besitzt eine längliche Form und gliedert sich in zwei Längsabschnitte 22, 24, die durch einen Flansch 30 voneinander getrennt sind. Bei diesem Zahnimplantataufbau 20 handelt es sich um jenen, der später in das im Kieferknochen des Patienten inserierte Zahnimplantat eingesetzt wird und dort dauerhaft verbleibt. Dieser erste Längsabschnitt 22 ist folglich an die Innengeometrie des Zahnimplantats angepasst, insbesondere auch im Hinblick auf vorgesehene Rotationssicherungen. Der in den Figuren gezeigte Aufbau des ersten Längsabschnitts 22 ist deshalb rein beispielhafter Natur und nicht beschränkend zu sehen. Vielmehr kann der Aufbau dieses ersten Längsabschnitts 22 durch andere Formen bzw. Geometrien ersetzt werden, je nachdem welches Zahnimplantat-System zum Einsatz kommt.

Der zweite Längsabschnitt 24, dessen genauer Aufbau später noch im Detail erläutert werden wird, ist dagegen unabhängig vom verwendeten Zahnimplantat-System und sieht deshalb - abgesehen von unterschiedlichen Durchmessern - in seiner Form bzw. Geometrie immer gleich aus.

Der zweite Längsabschnitt 24 dient zwei Aufgaben, nämlich einerseits eine exakte optische Erfassung über eine Scanvorrichtung zu ermöglichen, und andererseits eine Krone, eine Kappe bzw. ein Gerüst aufzunehmen, wobei diese Elemente üblicherweise durch Verkleben, Zementieren, etc. befestigt werden. Das heißt mit anderen Worten, dass der zweite Längsabschnitt 24 für diesen Zweck ebenfalls geometrisch und hinsichtlich der Oberflächenbeschaffenheit ausgelegt sein muss.

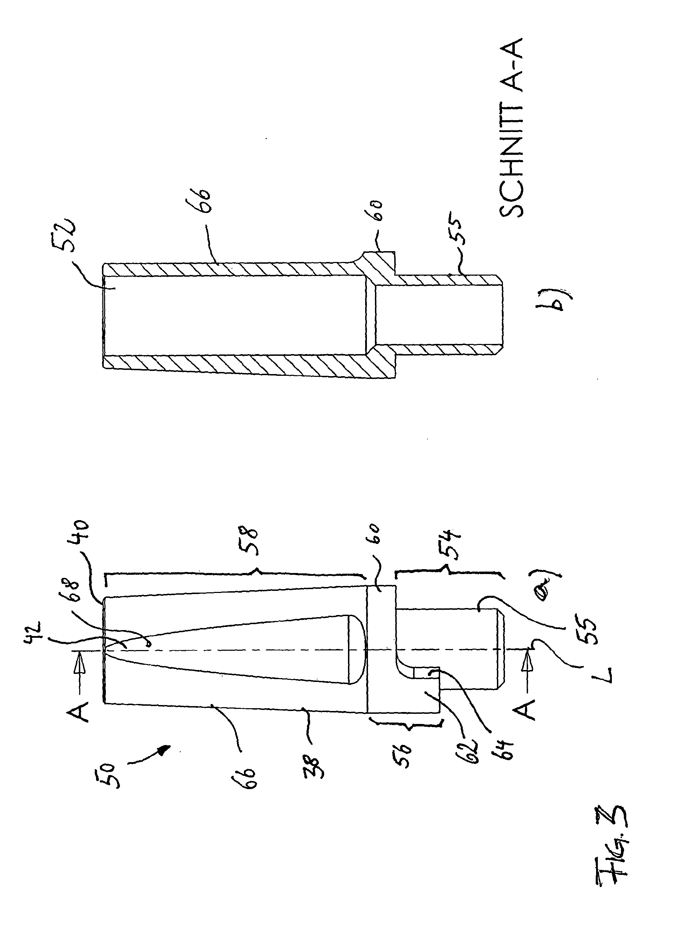

Das Verlängerungselement 50, das auch als Scanaufsatz bezeichnet wird, besitzt ebenfalls mehrere Längsabschnitte, die später noch mit Bezug auf die Fig. 3 näher erläutert werden. In der Fig. 1 ist der erste Längsabschnitt mit dem Bezugszeichen 54 gekennzeichnet.

Der erste Längsabschnitt 54 des Verlängerungselements 50 ist an den zweiten Längsabschnitt des Zahnimplantataufbaus 20 angepasst, so dass es möglich ist, das Verlängerungselement 50 auf den zweiten Längsabschnitt 54 des Zahnimplantataufbaus 20 zu stecken. Über bestimmte noch zu erläuternde Merkmale ist das Aufstecken des Verlängerungselements 50 auf den Zahnimplantataufbau 20 nur in einer bestimmten Position möglich, so dass die relative Position zwischen Verlängerungselement 50 und Zahnimplantataufbau 20 immer gleich ist.

Um das Verlängerungselement 50 mit dem Zahnimplantataufbau 20 für die Phase der optischen Erfassung zu verbinden, weist das Verlängerungselement 50 eine Bohrung 52 auf, die das Einführen einer Schraube ermöglicht, die - wie noch erläutert werden wird - den Zahnimplantataufbau 20 durchdringt und im Zahnimplantat verschraubt wird.

Der obere mit dem Bezugszeichen 58 gekennzeichnete Längsabschnitt, der nachfolgend als dritter Längsabschnitt bezeichnet wird, ist hinsichtlich seiner Gestaltung für eine gute optische Erfassung optimiert.

Wie bereits erwähnt, dient das Verlängerungselement 50 alleine dem Zweck, eine optische Erfassung auch dann zu ermöglichen, wenn der zweite Längsabschnitt 54 des Zahnimplantataufbaus 20 im Arbeitsmodell zu wenig hervorsteht.

Dadurch, dass die Geometrie des zweiten Längsabschnitts 24 des Zahnimplantataufbaus 20 unabhängig d.h. abgekoppelt ist von der Geometrie des ersten Längsabschnitts 22, lässt sich mit nur wenigen Verlängerungselementen ein Scanaufbau-System bereitstellen. Das heißt mit anderen Worten, dass dadurch, dass die Form des zweiten Längsabschnitts 24 des Zahnimplantataufbaus 20 immer gleich ist - abgesehen von unterschiedlichen Durchmessern - auch das Verlängerungselement 50 immer gleich aussehen kann (lediglich angepasst an wenige unterschiedliche Durchmesser). Der Aufbau der Verlängerungselemente 50 ist folglich unabhängig von dem verwendeten Zahnimplantat-System.

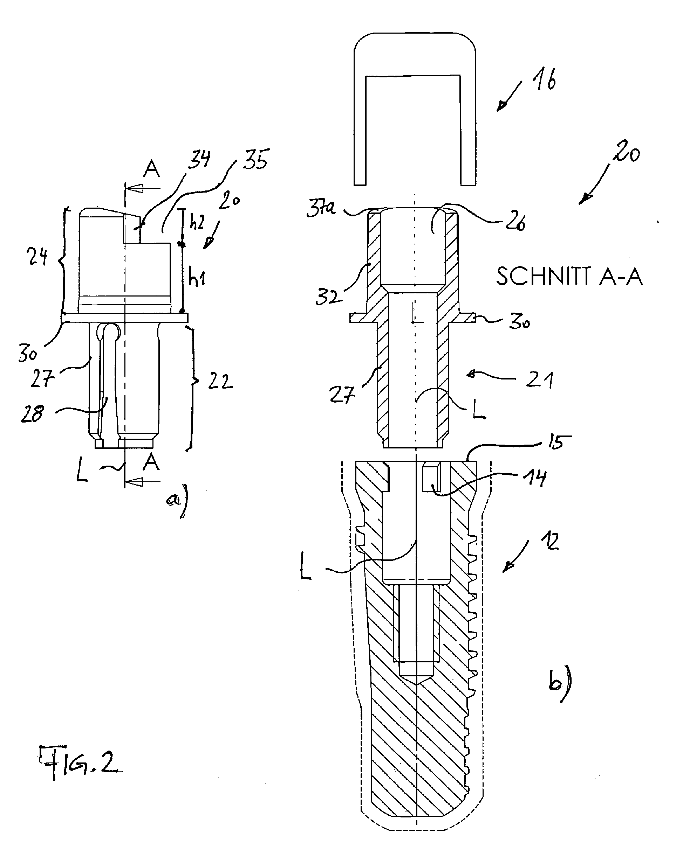

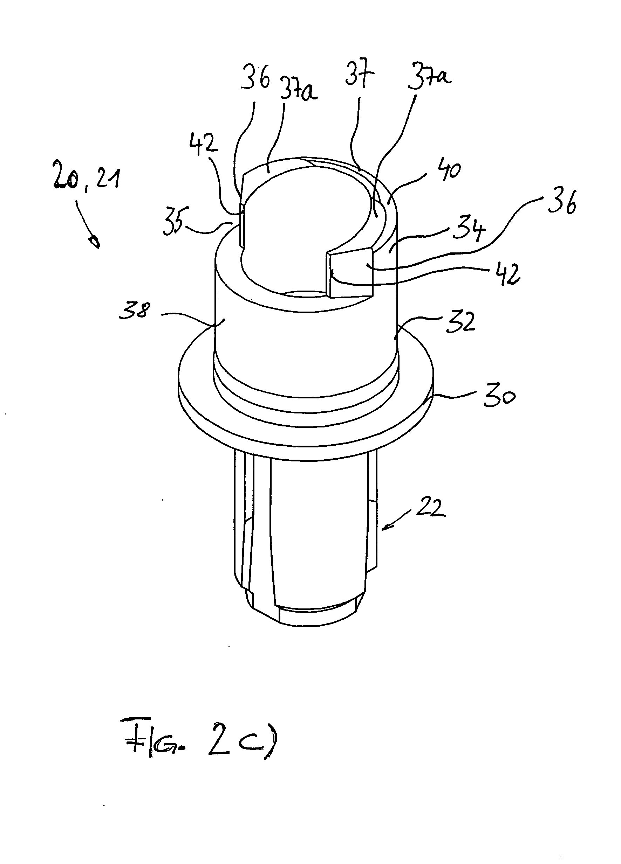

Mit Bezug auf die Fig. 2 bis 4 wird nun der genaue Aufbau des Zahnimplantataufbaus 20 und des Verlängerungselements 50 im Detail erläutert.

In Fig. 2a ist der Zahnimplantataufbau 20 in einer Seitenansicht dargestellt. Wie bereits erläutert, gliedert sich der Zahnimplantataufbau 20 in zwei Längsabschnitte 22, 24, die durch einen Flansch 30 voneinander getrennt sind. Die dem ersten Längsabschnitt 22 zugewandte Unterseite des Flansches 30 ist eine ebene Ringfläche und dient als Auflage bzw. Anschlagfläche auf einem Zahnimplantat, das in Fig. 2b mit dem Bezugszeichen 12 gekennzeichnet ist.

Der erste Längsabschnitt 22 ist hinsichtlich seiner Geometrie an das Zahnimplantat 12 angepasst, wobei dies insbesondere für den gewählten Durchmesser und die vorgesehene Positionier- und Rotationssicherungselemente gilt. So ist beispielsweise im ersten Längsabschnitt 22 des Zahnimplantataufbaus 20 ein nutenförmiges Positionierelement 28 in einem zylindrischen Körper 27 vorgesehen, das mit entsprechenden Rotationssicherungselementen 14 im Zahnimplantat 12 zusammenwirkt. Der genaue Aufbau des in Fig. 2b gezeigten Zahnimplantats und des zugehörigen Zahnimplantataufbaus, zumindest im Hinblick auf die Gestaltung des ersten Längsabschnitts 22, ist im Detail in der Druckschrift DE 10 2006 005 667 der Anmelderin erläutert. Der Offenbarungsgehalt dieser Druckschrift soll deshalb durch Bezugnahme hiermit aufgenommen werden.

Wie bereits zuvor erwähnt, kann das erfindungsgemäße Scanaufbau-System mit unterschiedlichsten Zahnimplantat-Systemen (d.h. unterschiedlichen Zahnimplantaten und daran angepasste Zahnimplantataufbauten) verwendet werden, wobei sich bei unterschiedlichen Zahnimplantat-Systemen lediglich der erste Längsabschnitt 22 ändert, der Aufbau des zweiten Längsabschnitts 24 aber gleich bleibt.

Der zweite Längsabschnitt 24 des Zahnimplantataufbaus 20 hat einen zylindrischen Körper 32 (vgl. Fig. 2c) der sich zunächst über eine Höhe h1 ausgehend vom Flansch 30 in Längsrichtung der Achse L erstreckt und anschließend als Zylinder-Segment 34 über eine Höhe h2 weiterläuft. Das Zylinder-Segment 34 zeichnet sich dadurch aus, dass sich die Zylinderwand über einen Winkel erstreckt, der kleiner als 360° ist, insbesondere im Bereich von 180° liegt, so dass ein Einschnitt 35 entsteht.

Das Zylinder-Segment 34 endet an beiden Seiten mit Flächen 36, die schräg zur radialen Richtung verlaufen.

Am oberen Ende des Zylinder-Segments 34 entsteht eine Randfläche 37, die ringsegmentförmig ist, allerdings nicht in einer Ebene liegt. Vielmehr besitzt die Randfläche 37 mehrere Flächenabschnitte, die gegenüber einer senkrecht zur Längsachse gedachten Fläche geneigt sind. Insbesondere sind Randflächen-Abschnitte 37a vorgesehen, die in die Flächen 36 münden und einerseits nach innen zum Radius hin abfallen und andererseits auch in Umfangsrichtung zu den Flächen 36 hin abfallen.

Wie zuvor bereits erwähnt, dient der zweite Längsabschnitt 24 des Zahnimplantataufbaus 20 zum einen dazu, eine Krone, ein Gerüst oder eine Kappe aus einem keramischen Material aufzunehmen. In Fig. 2b ist nun eine solche Kappe schematisch dargestellt und mit dem Bezugszeichen 16 gekennzeichnet. Diese Kappe 16 wird auf den zweiten Längsabschnitt 24 des Zahnimplantataufbaus 20 üblicherweise irreversibel durch Verkleben bzw. Zementieren befestigt und anschließend verblendet. Um die Kappe 16 Computer-unterstützt herstellen zu können, ist es erforderlich, die exakte Lage des Zahnimplantats 12 im Kieferknochen des Patienten zu kennen. Hierfür wird - wie in der eingangs erwähnten Druckschrift ausführlich erläutert - ein Abdruck des Kieferknochens des Patienten erstellt und danach ein sog. Arbeitsmodell gefertigt, wobei dieses Arbeitsmodell auch die im Kieferknochen inserierten Zahnimplantate 12 nachbildet. Das heißt mit anderen Worten, dass im Arbeitsmodell Modell-Zahnimplantate eingesetzt sind.

Um eine optische Erfassung durchführen zu können, wird in das Modell-Zahnimplantat, das zu dem Zahnimplantat 12 zumindest hinsichtlich der Innengeometrie identisch ist, der Zahnimplantataufbau 20 eingesetzt, bis die Unterseite des Flansches 30 an dem cervicalen Ende 15 des Zahnimplantats anschlägt. Der dann noch hervorstehende zweite Längsabschnitt 24 lässt sich dann optisch erfassen. Hierfür weist der zweite Längsabschnitt 24 insgesamt drei geometrische Elemente 38, 40, 42 auf, die in Fig. 2c gekennzeichnet sind. Diese drei geometrischen Elemente sollen eine Ermittlung der Lage der Längsachse des Zahnimplantats, die Lage der Rotationssicherungselemente und die Lage des cervicalen Endes des Zahnimplantats ermöglichen. Darüber hinaus sollen diese geometrischen Elemente so angeordnet sein, dass sie leicht und eindeutig optisch erfassbar sind.

Das erste geometrische Element 38 ist in Form eines zylindrischen Flächenbereichs auf dem zylindrischen Körper 32 vorgesehen, wobei diese Fläche eine exakte zylindrische Lage zur Längsachse des Zahnimplantataufbaus 20 und damit auch zur Längsachse des Zahnimplantats 12 besitzt. Das heißt mit anderen Worten, dass der Abstand jedes Punktes dieser Fläche des ersten geometrischen Elements zur Längsachse in radialer Richtung immer gleich ist.

Über die Erfassung dieses ersten geometrischen Elements 38 kann das System dann auf die Lage der Längsachse L des Zahnimplantats schließen.

Das zweite geometrische Element wird durch die Randfläche 37 bzw. durch die beiden Randflächenabschnitte 37a gebildet. Mit Hilfe dieses zweiten geometrischen Elements soll das System auf das cervicale Ende 15 des Zahnimplantats schließen können. Das bedeutet, dass das zweite geometrische Element 40 einen definierten bekannten Abstand zu der Unterseite des Flansches 30 besitzt.

Das dritte geometrische Element 42 wird in Form der einander zugewandten Flächen 36 gebildet, wobei diese Kanten parallel zur Längsachse verlaufen. Diese beiden Kanten haben eine feste Kantenposition gegenüber dem Positionierelement 28 im ersten Längsabschnitt 22, so dass über die Erfassung des dritten geometrischen Elements 42 auch die Position der Rotationssicherungselemente 14 im Zahnimplantat berechnet werden kann.

Es versteht sich, dass zur Ermittlung der drei genannten Parameter des Zahnimplantats 12 auch andere Merkmale des zweiten Längsabschnitts 24 als geometrische Elemente verwendet werden können. Wichtig dabei ist lediglich, dass sie einerseits leicht optisch erfassbar sind und andererseits eine eindeutige Lage zu der Längsachse, dem Flansch 30 bzw. dem Positionierelement 28 besitzen.

Da der Zahnimplantataufbau nicht mehr nur zum optischen Erfassen verwendet wird, sondern danach als Abutment in das Zahnimplantat im Kieferknochen des Patienten eingesetzt wird und dauerhaft dort verbleibt, ist der Zahnimplantataufbau 20 aus einem biokompatiblen Material, beispielsweise Titan, hergestellt. Um die optische Erfassung zu verbessern, sind zumindest die geometrischen Elemente im zweiten Längsabschnitt 24 mit einem reflexionsarmen Material beschichtet. Selbstverständlich ist es denkbar, den gesamten zweiten Längsabschnitt 24 oder den gesamten Zahnimplantataufbau mit einem solchen Material zu beschichten.

Dieses reflexionsarme bzw. reflexionsmindernde Material ist biokompatibel und verbleibt entweder dauerhaft auf dem Zahnimplantataufbau oder wird vor dem Einsetzen des Zahnimplantataufbaus in das Zahnimplantat mit Hilfe von Lösungsmitteln entfernt. Ein mögliches Beschichtungsmaterial wäre Keramik, das biokompatibel ist und daher auch dauerhaft auf dem Zahnimplantataufbau verbleiben könnte. Selbstverständlich sind andere Materialien ebenfalls denkbar, sofern sie die genannten Anforderungen erfüllen.

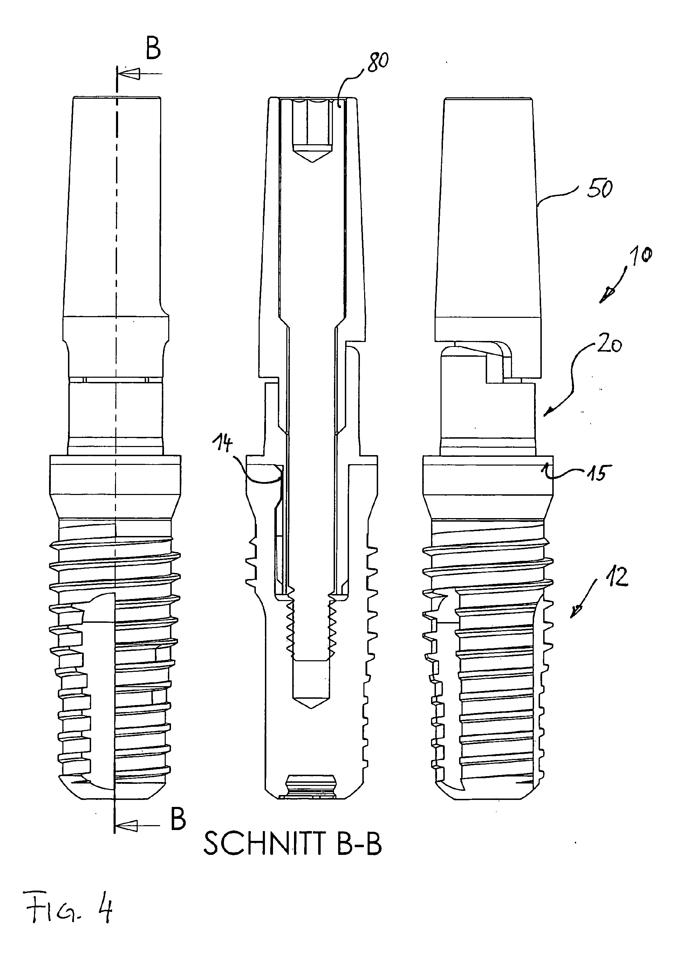

Falls der zweite Längsabschnitt 24 des Zahnimplantataufbaus im Arbeitsmodell nicht weit genug hervorsteht, um eine gute optische Erfassung durchführen zu können, wird das Verlängerungselement 50 aufgesetzt, wie dies in Fig. 1 oder 4 gezeigt ist. Das Verlängerungselement 50 sorgt dafür, dass zumindest ein, bevorzugt alle drei geometrischen Elemente weiter nach oben verlegt werden, so dass eine bessere optische Erfassung möglich wird. Wie bereits erwähnt, besitzt das Verlängerungselement 50 einen ersten Längsabschnitt 54, der mit dem zweiten Längsabschnitt 24 des Zahnimplantataufbaus zusammenwirkt. Dieser Abschnitt 54 des Verlängerungselements 50 ist folglich komplementär zu dem Längsabschnitt 24, insbesondere im Bereich der Höhe h2, ausgebildet. Das bedeutet, dass im ersten Längsabschnitt 54 ein zylindrischer Körper 55 vorgesehen ist, der in die Bohrung 26 des Zahnimplantataufbaus 20 passt. Komplementär zu dem Zylinder-Segment 34 mit den schräg verlaufenden Flächen 36 ist am Verlängerungselement 50 ebenfalls ein Zylinder-Segment 62 vorgesehen, das ebenfalls abgeschrägte Flächen 64 besitzt. Dieses Zylinder-Segment 62 passt in den Ausschnitt 35 des zweiten Längsabschnitts 24 des Zahnimplantataufbaus 20.

An dieses Zylinder-Segment 62 schließt sich in Längsrichtung ein zylindrischer Körper 60 an, wobei Zylinder-Segment 62 und zylindrischer Körper 60 den zweiten Längsabschnitt 56 bilden. An diesen zweiten Längsabschnitt 56 schließt sich in Längsrichtung der dritte Längsabschnitt 58 an, der im Wesentlichen durch einen zylindrischen Körper 66 gebildet wird. Dieser zylindrische Körper 66 besitzt eine Abflachung 68, die sich über die gesamte Länge des dritten Längsabschnitts 58 erstreckt und in Umfangsrichtung eine abnehmende Länge besitzt. Das heißt mit anderen Worten, dass die Ausdehnung der Abflachung 68 in Umfangsrichtung im Bereich des angrenzenden zweiten Längsabschnitts 56 größer ist als am gegenüberliegenden Ende des Längsabschnitts 58. Die Ausgestaltung der Abflachung 68 ist zu der eingezeichneten Achse L spiegelsymmetrisch vorgesehen.

Die drei geometrischen Elemente 38, 40, 42 sind im dritten Längsabschnitt 58 vorgesehen und mit den entsprechenden Bezugszeichen gekennzeichnet. So wird das erste geometrische Element 38 durch einen Bereich des zylindrischen Körpers 66 gebildet, das zweite geometrische Element durch die obere Randfläche des zylindrischen Körpers 66, die in einer Ebene senkrecht zur Längsachse liegt, und das dritte geometrische Element 42 wird durch die Abflachung 68 gebildet.

Da das Verlängerungselement 50 nur zum optischen Erfassen eingesetzt wird, kann es aus einem beliebigen Material, vorzugsweise einem Kunststoff, gefertigt werden, und eine reflexionsarme Oberfläche auch ohne zusätzliche Beschichtung aufweisen. Da der zweite Längsabschnitt 24 des Zahnimplantataufbaus 20 unabhängig ist vom eingesetzten Zahnimplantat-System, bleibt auch der erste und zweite Längsabschnitt 54, 56 des Verlängerungselements 50 unabhängig davon, so dass der Zahntechniker nur wenige Verlängerungselemente benötigt. Die verschiedenen Verlängerungselemente 50, die erforderlich sind, unterscheiden sich nur im Durchmesser, nicht aber in ihrer äußeren Form.

Aus der Fig. 4 ergibt sich, dass der Zahnimplantataufbau 20 mit aufgestecktem Verlängerungselement 50 über eine Schraube 80 im Zahnimplantat 12, d.h. im Modell-Zahnimplantat im Arbeitsmodell befestigt wird.

Es zeigt sich aus der vorhergehenden Beschreibung, dass einer der Vorteile des erfindungsgemäßen Scanaufbau-Systems darin zu sehen ist, dass die Variantenvielfalt bei den zum optischen Erfassen bzw. Scannen erforderlichen Bauteilen sich deutlich reduzieren lässt, da ein Bereich am Zahnimplantataufbau geschaffen wird (zweiter Längsabschnitt), der sozusagen standardisiert ist und vom eingesetzten Zahnimplantat-System (d.h. von der Form des ersten Längsabschnitts 22) unabhängig ist.

Ein weiterer Vorteil ist darin zu sehen, dass zum Scannen der Zahnimplantataufbau verwendet wird, der später in das im Kieferknochen des Patienten inserierte Zahnimplantat eingesetzt wird und dort dauerhaft verbleibt. Es werden also keine Hilfselemente mehr benötigt, die jeweils für die unterschiedlichen Zahnimplantat-Systeme angepasst sein müssen. Vielmehr wird der sowieso erforderliche Zahnimplantataufbau genutzt.

## Patentansprüche

1. Scanaufbau-System mit
- einem Zahnimplantataufbau (20), der zum dauerhaften Verbleib in einem Zahnimplantat (12) ausgelegt ist und einen ersten und einen zweiten Längsabschnitt (22, 24) aufweist und der erste Längsabschnitt (22) eine Längsachse (L) besitzt und bezüglich seiner Geometrie an das Zahnimplantat (12) angepasst ist, und der zweite Längsabschnitt (24) zur Aufnahme eines Aufbaus (16) ausgebildet ist, wobei
- der zweite Längsabschnitt (24) ein erstes (38) ein zweites (40) und ein drittes (42) geometrisches Element aufweist, die derart angeordnet sind, dass sie von außen über eine optische Abtastvorrichtung erfasst werden können, wobei das erste geometrische Element (38) ausgelegt ist, durch dessen optische Abtastung die Ausrichtung der Längsachse (L) des ersten Längsabschnitts (22) zu bestimmen, das zweite geometrische Element (40) ausgelegt ist, durch dessen optische Abtastung das cervicale Ende (15) des Zahnimplantats (12) zu bestimmen, und das dritte geometrische Element (42) ausgelegt ist, durch dessen optische Abtastung die Lage einer Rotationssicherung (14, 28) im ersten Längsabschnitt (22) zu bestimmen, und
- der zweite Längsabschnitt (24) eine bezüglich der optischen Abtastung reflexionsarme Oberfläche zumindest in den optisch abzutastenden Bereichen (38, 40, 42) besitzt; und
- einem Verlängerungselement (50), dessen eines Ende (54) ausgebildet ist, um mit dem zweiten Längsabschnitt (24) des Zahnimplantataufbaus (20) lösbar verbindbar zu sein, wobei auch das Verlängerungselement wenigstens eines der drei geometrischen Elemente (38, 40, 42) aufweist.

2. Scanaufbau-System nach Anspruch 1, **dadurch gekennzeichnet, dass** das erste geometrische Element (38) eine zylindrische Fläche ist, deren Längsachse (L) mit der Längsachse des ersten Längsabschnitts (22) fluchtet.

3. Scanaufbau-System nach Anspruch 1 oder 2, **dadurch gekennzeichnet, dass** das zweite geometrische (40) Element eine Fläche ist, die parallel zu einer Fläche liegt, die durch das cervicale Ende (15) des Zahnimplantats (12) gebildet wird.

4. Scanaufbau-System nach einem der Ansprüche 1 bis 3, **dadurch gekennzeichnet, dass** das dritte geometrische Element (42) zumindest zwei Kanten (42) umfasst, die parallel zueinander und parallel zu der Längsachse (L) des ersten Längsabschnitts (22) verlaufen.

5. Scanaufbau-System nach einem der Ansprüche 1 bis 4, **dadurch gekennzeichnet, dass** der Zahnimplantataufbau (20) aus Titan hergestellt ist.

6. Scanaufbau-System nach einem der Ansprüche 1 bis 5, **dadurch gekennzeichnet, dass** der Zahnimplantataufbau (20) mit einem reflexionsarmen biokompatiblen Material beschichtet ist.

7. Scanaufbau-System nach Anspruch 6, **dadurch gekennzeichnet, dass** das Material im trockenen Zustand wischfest ist.

8. Scanaufbau-System nach Anspruch 6 oder 7, **dadurch gekennzeichnet, dass** das Material lösbar ist, insbesondere durch ein Lösungsmittel.

9. Scanaufbau-System nach Anspruch 6, **dadurch gekennzeichnet, dass** das Material dauerhaft auf dem Zahnimplantataufbau (20) verbleibt.

10. Scanaufbau-System nach Anspruch 9, **dadurch gekennzeichnet, dass** das Material ein keramisches Material ist.

11. Scanaufbau-System nach einem der Ansprüche 1 bis 10, **dadurch gekennzeichnet, dass** das Verlängerungselement (50) aus einem Kunststoff hergestellt ist und eine reflexionsarme Oberfläche besitzt.
